# EUROPEAN PATENT APPLICATION

(11) **EP 4 651 276 A1**
(43) Date of publication of application: **19.11.2025**
(21) Application number: 25175153.3
(22) Date of filing: 08.05.2025
(51) Int. Cl.: H01M 50/15, H01M 50/171, H01M 50/103, H01M 50/183

(54) **BATTERY CELL AND MANUFACTURING METHOD OF THE SAME**

(30) Priority: 08.05.2024 KR 20240060610
(71) Applicant: SK On Co., Ltd., Seoul 03161 (KR)
(72) Inventor: GIL, Na Eun, 34124 Daejeon (KR); KIM, Min Cheol, 34124 Daejeon (KR); KIM, Hyun Ji, 34124 Daejeon (KR); LEE, Jong Hyeok, 34124 Daejeon (KR); JO, Yoon Ji, 34124 Daejeon (KR)
(74) Representative: Stolmár & Partner Patentanwälte PartG mbB

(57) **Abstract**

The present disclosure relates to a battery cell including an electrode assembly; a body case including an opening on one surface and accommodating the electrode assembly therein through the opening; a coupling region located adjacent to the opening along at least a portion of a circumference of the opening in one region of the body case; a coupling hole penetrating the body case in the coupling region; a cover portion including a terminal portion electrically connecting the electrode assembly to an outside and coupled to the body case in the coupling region to cover the opening; and an adhesive member cured by being located on an inner side surface of the body case and an outer side surface of the body case in the coupling region through the coupling hole and combining the cover portion and the body case.

## Description

### BACKGROUND OF THE INVENTION

### 1. Field

The present disclosure relates to a battery cell and a manufacturing method of the battery cell, and more particularly, to a battery cell with improved productivity and a method of manufacturing the same.

### 2. Description of the Related Art

The manufacturing process of a battery cell (or secondary battery) includes inserting an electrode assembly in which a positive electrode, a negative electrode, and a separator are stacked into a can (or body case), and then sealing the can (case or body case) by coupling a cap (cap assembly or cover).

A typical battery cell manufacturing process may use welding to seal a can and a cap. However, when there is a large gap between the two parts when the can and the cap are combined, it may be difficult to secure sealing due to poor welding. In addition, during the welding process, a foreign substance may enter the inside and degrade the performance of the electrode assembly.

### SUMMARY OF THE INVENTION

First, according to one aspect of the present disclosure, an object is to improve a manufacturing process of a battery cell to improve the productivity of the battery cell.

Second, according to another aspect of the present disclosure, an object is to improve the stability and lifetime of the battery cell.

Third, according to another aspect of the present disclosure, an object is to provide a battery cell that can ensure sealing of a can (case or body case) and a cap (cap assembly or cover portion) while replacing welding during the manufacturing process of the battery cell, and a manufacturing method of the battery cell.

Fourth, according to another aspect of the present disclosure, an object is to increase the coupling force between the can (case or body case) and the cap (cap assembly or cover).

A battery cell according to the present disclosure may be widely applied in the field of green technology such as electric vehicles, battery charging stations, energy storage systems (ESS), and other battery-based photovoltaics and wind power. In addition, the battery cell according to the present disclosure may be used for eco-friendly mobility, including electric vehicles and hybrid vehicles, to prevent climate change by restraining air pollution and greenhouse gas emissions.

A battery cell according to the present disclosure may include an electrode assembly; a body case including an opening on one surface and accommodating the electrode assembly therein through the opening; a coupling region located adjacent to the opening along at least a portion of a circumference of the opening in one region of the body case; a coupling hole penetrating the body case in the coupling region; a cover portion including a terminal portion electrically connecting the electrode assembly to an outside and coupled to the body case in the coupling region to cover the opening; and an adhesive member cured by being located on an inner side surface of the body case and an outer side surface of the body case in the coupling region through the coupling hole and combining the cover portion and the body case.

According to an embodiment, at least a portion of the adhesive member may be located in the coupling hole.

According an embodiment, the coupling hole may include a plurality of coupling holes, and at least a portion of the adhesive member may be coupled to each other on the inner side surface of the body case through at least a portion of the plurality of coupling holes.

According to an embodiment, the adhesive member may include a polyolefin-based polymer.

According to an embodiment, the adhesive member may combine the cover portion and the body case by heating and pressurizing at a predetermined adhesive temperature and an adhesive pressure.

According to an embodiment, an area of a cross-section of the cover portion in a direction parallel to the opening may be equal to or greater than an area of a cross-section of the body case.

According to an embodiment, a roughness of the outer side surface of the body case in the coupling region may be different from a roughness of the outer side surface of the body case located outside the coupling region.

More specifically, the roughness of the outer side surface of the body case in the coupling region may be greater than the roughness of the outer side surface of the body case located outside the coupling region.

Meanwhile, the cover portion may include a cover-facing surface facing the opening; and
a cover side surface bending and extending in a direction toward the body case at each corner of the cover-facing surface, and the coupling hole may prevent the cover side surface from being exposed to the outside when the cover side surface is combined with the coupling region.

According to an embodiment, when the cover portion is combined with the coupling region, the cover side surface may be stepped with the outer side surface of the body case located outside the coupling region.

According to an embodiment, when the cover portion is combined with the coupling region, the cover side surface may protrude to the outside than the outer side surface of the body case located outside the coupling region.

According to an embodiment, an area of a cross-section of the body case in the coupling region may be smaller than an area of an other cross-section of the cover portion located outside the coupling region in a direction parallel to the opening, and may be equal to an area of a cross-section of the cover portion, and when the cover portion is combined with the coupling region, the cover side surface may form a coplanar surface with the outer side surface of the body case located outside the coupling region.

According to an embodiment, an area of a cross-section of the body case in the coupling region may be is smaller than an area of an other cross-section of the cover portion located outside the coupling region in a direction parallel to the opening, and may be smaller than an area of a cross-section of the cover portion, and when the cover portion is combined with the coupling region, the cover side surface may be stepped with the outer side surface of the body case located outside the coupling region.

According to an embodiment, the opening may include a first opening formed on the one surface of the body case; and a second opening formed on an other surface of the body case facing the one surface of the body case, the coupling region may include: a first coupling region located adjacent to the first opening along at least a portion of a circumference of the first opening in the one region of the body case; and a second coupling region located adjacent to the second opening portion along at least a portion of a circumference of the second opening portion in an other region of the body case, the coupling hole may include: a first coupling hole penetrating the body case in the first coupling region; and a second coupling hole penetrating the body case in the second coupling region, and the cover portion may include: a first cover portion combined with the first coupling region to cover the first opening; and a second cover portion combined with the second coupling region to cover the second opening portion.

According to an embodiment, the adhesive member may include: a first adhesive member cured by being located on the inner side surface of the body case and the outer side surface of the body case in the first coupling region through the first coupling hole, and combining the first cover portion and the body case; and a second adhesive member cured by being located on the inner side surface of the body case and the outer side surface of the body case in the second coupling region through the second coupling hole, and combining the second cover portion and the body case.

According to an embodiment, the first coupling hole and the second coupling hole may include a plurality of first coupling holes and a plurality of second coupling holes, respectively, at least a portion of the first adhesive member may be coupled to each other on the inner side surface of the body case through at least a portion of the plurality of first coupling holes, and at least a portion of the second adhesive member may be coupled to each other on the inner side surface of the body case through at least a portion of the plurality of second coupling holes.

A method of manufacturing a battery cell according to the present disclosure may include accommodating an electrode assembly in a body case including an opening on one surface through the opening; applying an adhesive member to a coupling region located adjacent to the opening along at least a portion of a circumference of the opening in one region of the body case; combining a cover portion with the body case, wherein the cover portion is combined with the coupling region to cover the opening; and heating or pressurizing the coupling region so that the adhesive member is located on an outer side surface of the body case and an inner side surface of the body case through a coupling hole penetrating the body case in the coupling region.

First, according to an embodiment of the present disclosure, productivity of a battery cell may be improved by improving a manufacturing process of the battery cell.

Second, according to another embodiment of the present disclosure, the stability and lifetime of the battery cell may be improved.

Third, according to another embodiment of the present disclosure, a battery cell capable of ensuring sealing of a cap (cap assembly or cover portion) to a can (case or body case) while replacing welding during the manufacturing process of the battery cell, and a manufacturing method thereof may be provided.

Fourth, according to another embodiment of the present disclosure, the coupling force of the cap (cap assembly or cover portion) to the can (case or body case) may be increased.

### BRIEF DESCRIPTION OF THE DRAWINGS

FIG. 1 is an example of a battery cell according to the present disclosure.
FIG. 2 is an example of disassembling a battery cell according to the present disclosure.
FIG. 3A illustrates the distribution of an adhesive applied to an area A of FIG. 2 before combining a cover portion and a body case. FIG. 3B illustrates the distribution of the adhesive applied to the area A when the cover portion and the body case of FIG. 2 are combined.
FIG. 4A illustrates the distribution of the adhesive applied to the area A of FIG. 2 before combining the cover portion and the body case in one cross-section of the area A. FIG. 4B illustrates the distribution of the adhesive when the cover portion and the body case of FIG. 2 are combined in one cross-section of the area A.
FIGS. 5A to 5C illustrate another example of a battery cell according to the present disclosure.
FIG. 6 is a flowchart illustrating a method of manufacturing a battery cell according to the present disclosure.

### DETAILED DESCRIPTION

Hereinafter, referring to the accompanying drawings, preferred embodiments of the present disclosure will be described in detail. The configuration of a device or a control method described below is intended to illustrate embodiments of the present disclosure and is not intended to limit the scope of the present disclosure, and reference numbers used identically throughout the specification represent identical components.

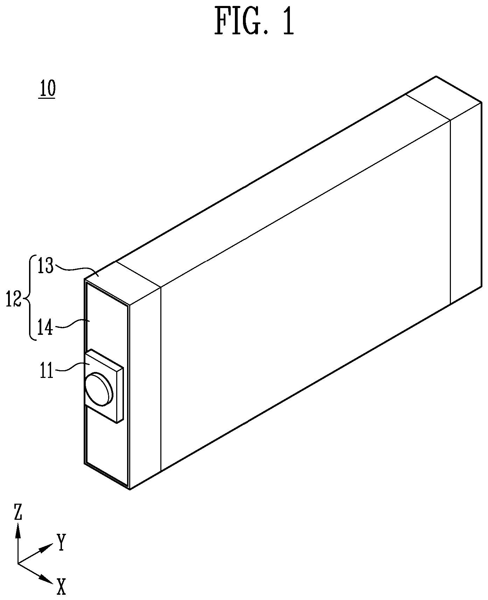

FIG. 1 is an example of a battery cell 10 according to the present disclosure.

The battery cell 10 according to the present disclosure refers to a secondary battery that may be repeatedly used by charging and discharging electric energy. For example, the secondary battery may be a lithium secondary battery, but it is not limited thereto.

The battery cell 10 according to the present disclosure may be divided into a pouch-type secondary battery, a prismatic secondary battery, or a cylindrical secondary battery depending on the shape. Referring to FIG. 1, for convenience of description, a rectangular secondary battery is illustrated as an example, but the present invention is not limited thereto. In other words, if a portion replaces welding for sealing, the portion may be used in the form of the battery cell 10.

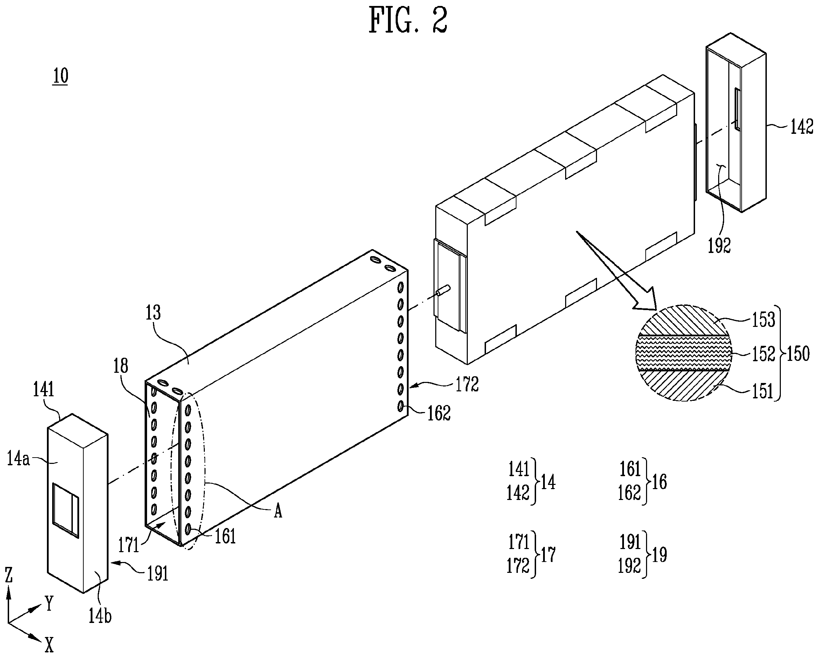

Referring to FIG. 1, the battery cell 10 according to the present disclosure may include an electrode assembly 150 including an anode 151, a cathode 153, and a separator 152 (refer to FIG. 2), and a case 12 accommodating the electrode assembly 150 therein.

The case 12 may include a body case 13 including an opening 17 (refer to FIG. 2) having an open surface, and a cover portion 14 coupled to the body case 13 to cover the opening 17. Unlike a normal cover portion has a planar shape and is combined to the opening 17 and welded to the body case 13, the cover portion 14 may be combined to one region of the body case 13 along a circumference of the opening 17 to close the opening 17.

The case 12 may accommodate the electrode assembly 150 therein. The case 12 may accommodate the electrode assembly 150 and an electrolyte solution therein. The case 12 may include a metallic material. For example, the case 12 may include a plurality of layers, and one of the plurality of layers may include aluminum.

That is, the case 12 may include a material having high mechanical rigidity to protect the battery cell 10 from external impact.

The cover portion 14 may cover the opening 17 while enclosing a portion of the body case 13.

The normal cover portion may be machined to a size suitable for the opening 17 and combined through welding. However, when the size of the normal cover portion is erroneously processed and does not match the size of the opening 17 and a gap occurs, the opening 17 may not be completely sealed. In addition, when a foreign substance enters the inside of the case 12 during the welding process, the performance of the electrode assembly 150 may be deteriorated.

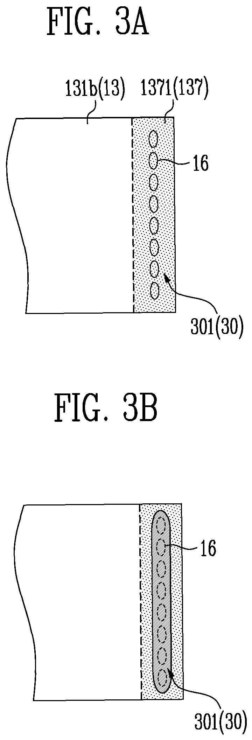

The battery cell 10 according to the present disclosure may include the cover portion 14 that surrounds at least the portion of the body case 13. In addition, a coupling hole 16 (refer to FIG. 2) may be included so that an adhesive member 30 penetrates into an inner side surface 131b of the body case 13 in order to maintain sealing force while combining the cover portion 14 and the body case 13 using the adhesive member 30 (or adhesive, refer to FIG. 3A) rather than welding.

FIG. 2 illustrates an example of the battery cell 10 according to the present disclosure.

Referring to FIG. 2, the battery cell 10 according to the present disclosure may include the electrode assembly 150, the body case 13 including the opening 17 on one surface thereof and accommodating the electrode assembly 150 therein through the opening 17, a coupling region 137 located adjacent to the opening 17 along at least a portion of the circumference of the opening 17 in the one region of the body case 13, the coupling hole 16 penetrating the body case 13 in the coupling region 137, a terminal portion 11 (refer to FIG. 1) electrically connecting the electrode assembly 150 and the outside, and the cover portion 14 combining with the body case 13 to cover the opening 17 in the coupling region 137.

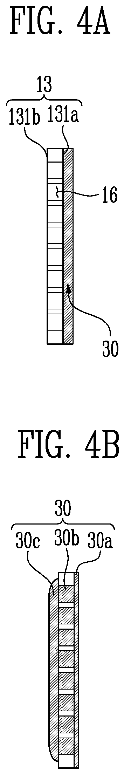

In addition, the battery cell 10 may further include the adhesive member 30 that is located on the inner side surface 131b (refer to FIG. 4A) and an outer side surface 131a (refer to FIG. 3A) of the body case in the coupling region 137 through the coupling hole 16 and is cured to couple the cover portion 14 and the body case 13.

The electrode assembly 150 may include the anode 151, the cathode 153, and the separator 152 for separating the anode 151 and the cathode 153 from each other. The electrode assembly 150 may be classified into a stacking type, a winding type, a stack-folding type, and a Z-stacking type according to a method in which the anode 151, the cathode 153, and the separator 152 are stacked. The type of the electrode assembly 150 included in the battery cell 10 according to the present disclosure is not limited. That is, the battery cell 10 according to the present disclosure may include the electrode assembly 150 manufactured in any one of the stacking type, the winding type, the stack-folding type, and the Z-stacking type.

The battery cell 10 may include a positive electrode current collector (not shown) respectively coupled to the stacked anode 151 and a negative electrode current collector (not shown) respectively coupled to the stacked cathode 153. The positive electrode current collector and the negative electrode current collector may include a known conductive material in a range that does not cause a chemical reaction in a lithium secondary battery. For example, the current collectors may include one of stainless steel, nickel (Ni), aluminum (Al), titanium (Ti), copper (Cu), and alloys thereof, and may be provided in various forms such as a film, sheet, or foil.

The positive electrode current collector and the negative electrode current collector may electrically couple the electrode assembly 150 to the outside through the terminal portion 11.

Meanwhile, the anode 151 and the cathode 153 may include an active material. The anode 151 may include a positive electrode active material, and the cathode 153 may include a negative electrode active material. The positive electrode active material may be a material into which lithium ions may be inserted and desorbed, and the negative electrode active material may be a material to which lithium ions may be adsorbed and desorbed.

For example, the positive electrode active material may be a lithium metal oxide, and the negative electrode active material may be one of a carbon-based material such as crystalline carbon, amorphous carbon, carbon composite, carbon fiber, a lithium alloy, silicon (Si), and tin (Sn).

In addition, each of the anode 151 and the cathode 153 may further include a binder (not shown) and a conductive material (not shown) to improve the mechanical stability and electrical conductivity.

The separator 152 may be configured to prevent an electrical short circuit between the anode 151 and the cathode 153 and generate a flow of ions. The type of the separator is not particularly limited, but may include a porous polymer film (membrane or thin film). For example, the separator 152 may include a porous polymer film or a porous nonwoven fabric.

Meanwhile, the battery cell 10 may include an electrolyte to immerse the electrode assembly 150 located in the case 12. The electrolyte may be a non-aqueous electrolyte. The electrolyte may include a lithium salt and an organic solvent. The electrolyte may further include an additive. The additive may form a film on the anode or cathode through a chemical reaction in the battery. For example, an anode interface film may be formed on the anode 151, and a cathode interface film may be formed on the cathode 153.

Referring to FIG. 2, the body case 13 may include the opening 17 on one surface, and may accommodate the electrode assembly 150 therein through the opening 17. That is, the body case 13 may form an accommodation space 18 for accommodating the electrode assembly 150 therein.

In addition, the body case 13 may include the coupling region 137 (refer to FIG. 3) located adjacent to the opening 17 along at least the portion of the circumference of the opening 17 in the one region of the body case 13, and the coupling hole 16 penetrating the body case 13 in the coupling region 137.

The cover portion 14 may close the opening 17 while combining to the coupling region 137. When the cover portion 14 and the body case 13 are combined together, an adhesive member that is not a typical welding member is used, so that at least a portion of the cover portion 14 or the body case 13 are combined together in the coupling region 137 having a surface of a certain region that is not a line, thereby ensuring a sealing force and a joining force corresponding to welding.

In addition, when the cover portion 14 is combined to the coupling region 137, the adhesive member 30 may be moved to the inner side surface 131b of the body case 13 through the coupling hole 16 to be cured, thereby increasing the sealing force and the coupling force between the cover portion 14 and the body case 13.

The cover portion 14 may include the terminal portion 11 (refer to FIG. 1) that electrically connects the electrode assembly 150 to the outside. The terminal portion 11 may allow an electrical connection between the electrode assembly 150 and the outside.

The coupling hole 16 may prevent a cover side surface 14b from being combined to the coupling region 137 and exposed to the outside.

The coupling hole 16 may be formed through the body case 13 along the circumference of the opening 17 in the coupling region 137. In addition, the coupling hole 16 may include a plurality of coupling holes 16. The plurality of coupling holes 16 may be disposed through the body case 13 at predetermined intervals in the coupling region 137.

When the length of one face of the body case 13 varies along the circumference of the opening 17, the intervals may also vary. Referring to FIG. 2, the interval between the plurality of coupling holes 16 arranged along a long edge of the circumference of the opening 17 may be different from the interval between the plurality of coupling holes 16 arranged along a short edge of the circumference of the opening 17.

On the other hand, the cover portion 14 may include a cover-facing surface 14a facing the opening 17, and the cover side surface 14b bent and extending in a direction toward the body case 13 at each corner of the cover-facing surface 14a.

Therefore, when the cover side surface 14b is combined to the coupling region 137, the coupling hole 16 may be prevented from exposed to the outside from being visually exposed to the user or the operator.

That is, the coupling hole 16 may be hidden by the cover portion 14 in the final product form and not visually exposed to the outside.

Since the cover portion 14 is combined while surrounding the coupling region 137 along the circumference of the opening 17, an area of one end surface of the cover portion 14 may be larger than an area of one end surface of the body case 13.

Meanwhile, referring to FIG. 2, the battery cell 10 according to the present disclosure may include the electrode assembly 150, the body case 13 accommodating the electrode assembly 150, a first opening 171 formed on one surface of the body case 13, a second opening 172 formed on the other surface of the body case 13 facing the one surface of the body case 13, a first coupling region 1371 located adjacent to the first opening 171 along at least a portion of the circumference of the first opening 171 in the one region of the body case 13, a second coupling region (not shown) located adjacent to the second opening 172 along at least a portion of the circumference of the second opening 172 in another region of the body case 13, a first coupling hole 161 penetrating the body case 13 in the first coupling region 1371, a second coupling hole 162 penetrating the body case 13 in the second coupling region (not shown), a first cover portion 141 coupled to the first coupling region 1371 to cover the first opening 171, and a second cover portion 142 coupled to the second coupling region to cover the second opening 172.

The battery cell 10 may further include a first adhesive member 301 (refer to FIG. 3A) that is cured by being located on the inner side surface 131b of the body case 13 and the outer side surface 131a of the body case 13 in the first coupling region 1371 through the first coupling hole 161 to couple the first cover portion 141 and the body case 13, and a second adhesive member (not shown) that is cured by being located on the inner side surface 131b and the outer side surface 131a of the body case 13 in the second coupling region through the second coupling hole 162 to couple the second cover portion 142 and the body case 13.

Although the second adhesive member and the second coupling region are not shown in the drawings, it will be apparent to those skilled in the art that the first adhesive member 301 and the first coupling region 1371 are located adjacent to the first opening 171, and similarly, the second adhesive member and the second coupling region are located adjacent to the second opening 172.

The opening 17 may include the first opening 171 formed on the one surface of the body case 13 and the second opening 172 formed on the other surface of the body case 13 facing the one surface of the body case 13 to make the terminal portion 11 of each polarity to face in opposite directions.

The coupling region 137 may include the first coupling region 1371 located adjacent to the first opening 171 along at least the portion of the circumference of the first opening 171 in the one region of the body case 13, and the second coupling region located adjacent to the second opening 172 along at least the portion of the circumference of the second opening 172 in the other region of the body case 13.

The coupling hole 16 may include the first coupling hole 161 penetrating the body case 13 in the first coupling region 1371, and the second coupling hole 162 penetrating the body case 13 in the second coupling region (not shown).

The cover portion 14 may include the first cover portion 141 coupled to the first coupling region 1371 to cover the first opening 171, and the second cover portion 142 coupled to the second coupling region to cover the second opening 172.

The adhesive member 30 may include the first adhesive member 301 that is cured by being located on the inner side surface 131b and the outer side surface 131a of the body case 13 in the first coupling region 1371 through the first coupling hole 161 to couple the first cover portion 141 and the body case 13, and the second adhesive member that is cured by being located on the inner side surface 131b and the outer side surface 131a of the body case 13 in the second coupling region through the second coupling hole 162 to couple the second cover portion 142 and the body case 13.

The first coupling hole 161 and the second coupling hole 162 may include a plurality of first coupling holes 161 and a plurality of second coupling holes 162, respectively. At least a portion of the first adhesive member 301 may be coupled to each other on the inner side surface 131b of the body case 13 through at least a portion of the first coupling hole 161 of the plurality of first coupling holes 161, and at least a portion of the second adhesive member may be coupled to each other on the inner side surface 121b of the body case 13 through at least a portion of the second coupling hole 162 of the plurality of second coupling holes 162.

The first adhesive member 301 and the second adhesive member may include a polyolefin-based polymer.

Unless otherwise stated, the description of one opening in this specification may equally apply to the other opening.

FIG. 3A illustrates the distribution of the adhesive applied to the area A of FIG. 2 before combining the cover portion 14 and the body case 13. FIG. 3B illustrates the distribution of the adhesive applied to the area A when the cover portion 14 and the body case 13 of FIG. 2 are combined.

Referring to FIG. 3A, the battery cell 10 may further include the adhesive member 30 that is cured by being located on the inner side surface 131b and the outer side surface 131a of the body case 13 (refer to FIG. 4A) in the coupling region 137 through the coupling hole 16 to couple the cover portion 14 and the body case 13.

The adhesive member 30 may be applied (or sprayed) to the coupling region 137 before the cover portion 14 is coupled to the body case 13. After the adhesive member 30 is applied in a viscous liquid form, after the cover portion 14 is combined, the adhesive member 30 may be cured by pressurizing and/or heating at a predetermined adhesive temperature and/or a predetermined adhesive pressure.

The adhesive member 30 may include a polyolefin-based polymer. The adhesive member 30 may use a heat-melt type adhesive and other types of polymers as long as there is no side reaction when in contact with the electrolyte.

For example, the adhesive member 30 may be a polyolefin-based polymer such as polyethylene or polypropylene. In contrast, the adhesive member 30 may include a polyurethane-based polymer.

**[Table 1]**

| | Embodiments | Comparative Example 1 | Comparative Example 2 | Comparative Example 3 | Comparative Example 4 |
|---|---|---|---|---|---|
| Pressure (MPa) | 140 | 130 | 150 | 140 | 140 |
| Temperature (°C) | 160 | 160 | 160 | 150 | 170 |
| Whether the cover portion and body case are modified | No Variations | No Variations | Variations | No Variations | No Variations |
| Sealing between cover portion and body case | Good | Defects | Defects | Defects | Good, but a portion of adhesive member melts |

Table 1 above is the result of summarizing the deformation of the body case 13 and the cover portion 14 and the sealing force of the adhesive member 30 under various pressure and temperature conditions applied to the coupling region 137 or the body case 13 or the cover portion 14.

Referring to Table 1, when the embodiment is performed under the conditions of 140 MPa (megapascal) and 160 °C (degree Celsius), the deformation and the sealing force is better than the other comparative examples. However, since the adhesive member 30 may vary depending on the thickness of the cover portion 14 and the body case 13, and the content of the adhesive component in the adhesive member 30, the adhesive pressure and the adhesive temperature are not limited to 140 MPa and 160 °C.

Referring to FIG. 3A, when manufacturing the battery cell 10, the adhesive member 30 may be applied to the outer side surface 131a of the body case 13 in the coupling region 137. FIG. 3A illustrates the one side of the body case 13 viewed from the inner side surface 131b of the body case 13. Therefore, an example of which the adhesive member 30 is applied to the rear of the body case is illustrated in FIG. 3A.

FIG. 3B illustrates an example of which the adhesive member 30 is pushed into the inner side surface 131b of the body case 13 through the coupling hole 16 and hardened during pressurizing and/or heating at the bonding temperature and/or the bonding pressure after the cover portion 14 is coupled to the body case 13.

Referring to FIG. 3B, the coupling hole 16 may include the plurality of coupling holes 16, and at least a portion of the adhesive member 30 may be coupled to each other on the inner side surface 131b of the body case 13 through at least a portion of the plurality of coupling holes 16. Therefore, the sealing force and the coupling force may be improved when the adhesive member 30 is separated from each of the coupling holes 16 on the inner side surface 131b of the body case 13.

That is, at least the portion of the adhesive member 30 may move from the outer side surface 131a to the inner side surface 131b of the body case 13 through the coupling hole 16 before curing, so that the adhesive member 30 may include an adhesive member 30b cured in the coupling hole 16, an adhesive member 30a cured in the outer side surface 131a, and an adhesive member 30c cured in the inner side surface 131b of the body case 13.

On the other hand, referring to FIGS. 3A and 3B, for convenience of description, in order to illustrate the adhesive member 30, only the one surface of the body case 13 and the coupling hole 16 located on the one surface of the coupling region 137 are described, but the same applies to the coupling hole 16 and the adhesive member 30 located in other positions. That is, the adhesive member 30 may be applied to the outer side surface 131a of the body case 13 so as to surround the opening 17 (refer to FIG. 2).

Meanwhile, FIGS. 3A and 3B only illustrate the first coupling region 1371 adjacent to the first opening 171 (refer to FIG. 2) of the coupling region 137, the form, structure, or function of the first coupling region 1371 described in FIGS. 3A and 3B may be equally applied to the second coupling region (not shown) located adjacent to the second opening 172 (refer to FIG.2).

FIG. 4A illustrates the distribution of the adhesive applied to the area A of FIG. 2 before combining the cover portion 14 and the body case 13 in one cross-section of the area A. FIG. 4B illustrates the distribution of the adhesive when the cover portion 14 and the body case 13 of FIG. 2 are combined in one cross-section of the area A.

Referring to FIGS. 4A and 4B, the adhesive member 30 may be located on the outer side surface 131a of the body case 13 before curing. Thereafter, the adhesive member 30 may couple the cover portion 14 and the body case 13 by heating and pressurizing at a predetermined adhesive temperature and an adhesive pressure. In addition, the adhesive member 30 may be moved to the inner side surface 131b of the body case 13 through the coupling hole 16 at the adhesive temperature and/or the adhesive pressure, and may be cured while being coupled to each other.

Therefore, the cured adhesive member 30 may be distributed on the outer side surface 131a of the body case 13, the inner side surface 131b of the body case 13, and the coupling hole 16 in the coupling region 137. That is, at least the portion of the adhesive member 30 may be located in the coupling hole 16.

Referring to FIGS. 4A and 4B, for convenience of description, in order to describe the adhesive member 30, only the one surface of the body case 13 and the coupling hole 16 located on the one surface of the coupling region 137 are described, but the same applies to the coupling hole 16 and the adhesive member 30 located in other positions. That is, the adhesive member 30 may be applied to the outer side surface 131a of the body case 13 so as to surround the opening 17 (refer to FIG. 2).

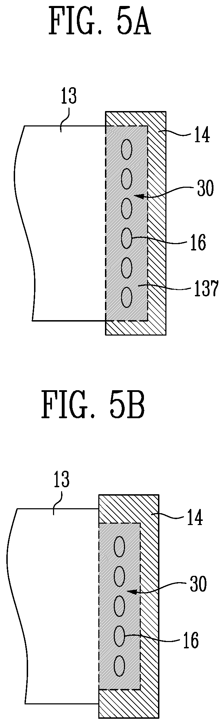

FIGS. 5A to 5C illustrate another example of the battery cell 10 according to the present disclosure.

FIG. 5A illustrates an example in which the cover portion 14 covers the opening 17 while enclosing the body case 13.

Referring to FIG. 5A, an area of a cross-section of the cover portion 14 in a direction parallel to the opening 17 (refer to FIG. 2) may be equal to or larger than an area of a cross-section of the body case 13.

More specifically, when the cover portion 14 is coupled to the coupling region 137, the cover side surface 14b may be stepped from the outer side surface 131a of the body case 13 located outside the coupling region 137. That is, when the cover portion 14 is coupled to the coupling region 137, the cover side surface 14b may protrude outward from the outer side surface 131a of the body case 13 located outside the coupling region 137.

Although not shown, referring to FIG. 5A, the area of the one end surface of the body case 13 in the coupling region 137 in the direction parallel to the opening 17 is smaller than the area of the other end surface of the body case 13 located outside the coupling region 137 and the area of the one end surface of the cover portion 14, so that when the cover portion 14 is coupled to the coupling region 137, the cover side surface 14b may be stepped from the outer side surface 131a of the body case 13 located outside the coupling region 137.

That is, since the area of the one end surface of the cover portion 14 is larger than the area of the one side surface of the body case 13 in the coupling region 137, the area of the other end surface of the body case 13 located outside the coupling region 137 becomes smaller, and therefore unlike FIG. 5A, the cover side surface 14b may be stepped inward from the body case 13.

FIG. 5B illustrates another example in which the cover portion 14 covers the opening 17 while enclosing the body case 13.

Referring to FIG. 5B, the area of the one end surface of the body case 13 in the coupling region 137 in the direction parallel to the opening 17 may be smaller than the area of the other end surface of the body case 13 located outside the coupling region 137, and may be the same as the area of the end surface of the cover portion 14, so that when the cover portion 14 is coupled to the coupling region 137, the cover side surface 14b may form a coplanar surface with the outer side surface 131a of the body case 13 located outside the coupling region 137.

Unlike FIG. 5A, since the area of the opening 17 is reduced, the size of the electrode assembly 150 accommodated through the opening 17 may be reduced, but the outer side surface 131a of the body case 13 and the cover side surface 14b may form a smooth surface, a space may be efficiently utilized when the battery cell 10 is stacked.

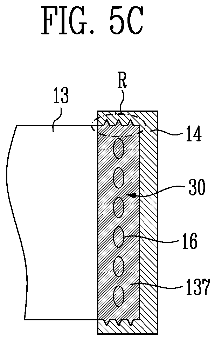

FIG. 5C illustrates another example in which the cover portion 14 covers the opening 17 while enclosing the body case 13.

FIG. 5C above is similar to FIG. 5A, but is an example in which the roughness of the combined area is different. That is, the roughness of the outer side surface 131a of the body case 13 in the coupling region 137 may be different from the roughness of the outer side surface 131a of the body case 13 located outside the coupling region 137.

More specifically, the roughness of the outer side surface 131a of the body case in the coupling region 137 may be greater than the roughness of the outer side surface 131a of the body case located outside the coupling region 137 to improve the bonding force and sealing force of the adhesive member 30 compared to the embodiment of FIG. 5A.

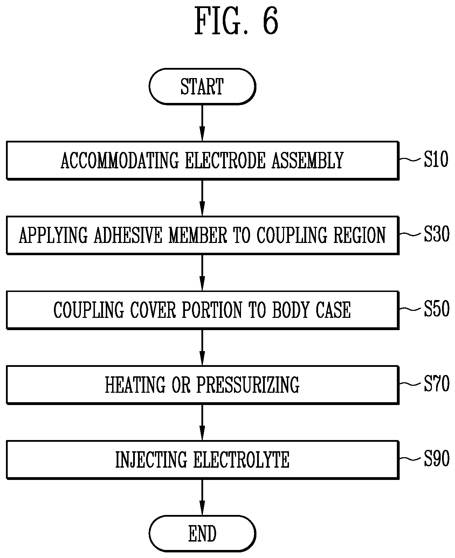

FIG. 6 is a flowchart illustrating a method of manufacturing the battery cell 10 according to the present disclosure.

The method of manufacturing the battery cell 10 according to the present disclosure may include a step S10 of accommodating the electrode assembly 150 through the opening 17 in the body case 13 including the opening 17 on the one surface, a step S30 of applying the adhesive member 30 to the coupling region 137 located adjacent to the opening 17 along at least the portion of the circumference of the opening 17 in the one region of the body case 13, a step S50 of coupling the cover portion 14 that is coupled to the coupling region 137 and covers the opening 17 to the body case 13, and a step S70 of heating or pressurizing the coupling region 137 such that the adhesive member 30 is located on the outer side surface 131a and the inner side surface 131b of the body case 13 through the coupling hole 16 penetrating the body case 13 in the coupling region 137.

**As** described above, in the step S10 of accommodating the electrode assembly 150, the method of manufacturing the battery cell 10 according to the present disclosure may arrange the electrode assembly 150 in the accommodation space 18 through the opening 17.

Thereafter, the method of manufacturing the battery cell 10 according to the present disclosure may perform the step S30 of applying the adhesive member 30 to the coupling region 137. The reason why the coupling hole 16 is disposed in the body case 13 instead of the cover portion 14 is to improve the sealing force and the bonding force by moving the adhesive member 30 to the inner side surface 131b of the body case 13 through the step S70 of heating or pressurizing the coupling region 137 to be performed later.

The method of manufacturing the battery cell 10 according to the present disclosure may further include a step S90 of injecting the electrolyte into the accommodation space 18 after the step S70 of heating or pressurizing the coupling region 137. Since the gap between the cover portion 14 and the body case 13 is sealed by the adhesive member 30, the method of manufacturing the battery cell 10 according to the present disclosure may inject the electrolyte into the accommodation space 18.

Some of the aspects of the present disclosure are as follows:
Aspect 1: A battery cell comprising: an electrode assembly; a body case including an opening on one surface and accommodating the electrode assembly therein through the opening; a coupling region located adjacent to the opening along at least a portion of a circumference of the opening in one region of the body case; a coupling hole penetrating the body case in the coupling region; a cover portion including a terminal portion electrically connecting the electrode assembly to an outside and coupled to the body case in the coupling region to cover the opening; and an adhesive member cured by being located on an inner side surface of the body case and an outer side surface of the body case in the coupling region through the coupling hole and combining the cover portion and the body case.
Aspect 2: The battery cell according to aspect 1, wherein at least a portion of the adhesive member is located in the coupling hole.
Aspect 3: The battery cell according to anyone of aspect 1 or 2, wherein the coupling hole includes a plurality of coupling holes, and wherein at least a portion of the adhesive member is coupled to each other on the inner side surface of the body case through at least a portion of the plurality of coupling holes.
Aspect 4: The battery cell according to preceding aspects, wherein the adhesive member combines the cover portion and the body case by heating and pressurizing at a predetermined adhesive temperature and an adhesive pressure.
Aspect 5: The battery cell according to preceding aspects, wherein an area of a cross-section of the cover portion in a direction parallel to the opening is equal to or greater than an area of a cross-section of the body case.
Aspect 6: The battery cell according to preceding aspects, wherein a roughness of the outer side surface of the body case in the coupling region is different from a roughness of the outer side surface of the body case located outside the coupling region.
Aspect 7: The battery cell according to aspect 6, wherein the roughness of the outer side surface of the body case in the coupling region is greater than the roughness of the outer side surface of the body case located outside the coupling region.
Aspect 8: The battery cell according to preceding aspects, wherein the cover portion includes: a cover-facing surface facing the opening; and a cover side surface bending and extending in a direction toward the body case at each corner of the cover-facing surface, and wherein the coupling hole prevents the cover side surface from being exposed to the outside when the cover side surface is combined with the coupling region.
Aspect 9: The battery cell according to aspect 8, wherein, when the cover portion is combined with the coupling region, the cover side surface is stepped with the outer side surface of the body case located outside the coupling region.
Aspect 10: The battery cell according to anyone of aspect 8 or 9, wherein, when the cover portion is combined with the coupling region, the cover side surface protrudes to the outside than the outer side surface of the body case located outside the coupling region.
Aspect 11: The battery cell according to anyone of aspects 8 to 10, wherein an area of a cross-section of the body case in the coupling region is smaller than an area of an other cross-section of the cover portion located outside the coupling region in a direction parallel to the opening, and equal to an area of a cross-section of the cover portion, and wherein, when the cover portion is combined with the coupling region, the cover side surface forms a coplanar surface with the outer side surface of the body case located outside the coupling region.
Aspect 12: The battery cell according to anyone of aspects 8 to 11, wherein an area of a cross-section of the body case in the coupling region is smaller than an area of an other cross-section of the cover portion located outside the coupling region in a direction parallel to the opening, and smaller than an area of a cross-section of the cover portion, and wherein, when the cover portion is combined with the coupling region, the cover side surface is stepped with the outer side surface of the body case located outside the coupling region.
Aspect 13: The battery cell according to preceding aspects, wherein the opening includes: a first opening formed on the one surface of the body case; and a second opening formed on an other surface of the body case facing the one surface of the body case, wherein the coupling region includes: a first coupling region located adjacent to the first opening along at least a portion of a circumference of the first opening in the one region of the body case; and a second coupling region located adjacent to the second opening portion along at least a portion of a circumference of the second opening portion in an other region of the body case, wherein the coupling hole includes: a first coupling hole penetrating the body case in the first coupling region; and a second coupling hole penetrating the body case in the second coupling region, and wherein the cover portion includes: a first cover portion combined with the first coupling region to cover the first opening; and a second cover portion combined with the second coupling region to cover the second opening portion.
Aspect 14: The battery cell according to aspect 13, wherein the adhesive member includes: a first adhesive member cured by being located on the inner side surface of the body case and the outer side surface of the body case in the first coupling region through the first coupling hole, and combining the first cover portion and the body case; and a second adhesive member cured by being located on the inner side surface of the body case and the outer side surface of the body case in the second coupling region through the second coupling hole, and combining the second cover portion and the body case.
Aspect 15: The battery cell according to aspect 14, wherein the first coupling hole and the second coupling hole include a plurality of first coupling holes and a plurality of second coupling holes, respectively, wherein at least a portion of the first adhesive member is coupled to each other on the inner side surface of the body case through at least a portion of the plurality of first coupling holes, and wherein at least a portion of the second adhesive member is coupled to each other on the inner side surface of the body case through at least a portion of the plurality of second coupling holes.

Since the present disclosure may be implemented in various forms, the scope of rights is not limited to the above-described embodiments. Therefore, if the modified embodiment includes the elements of the claims of the present disclosure, it should be considered to fall within the scope of the present disclosure.

## Claims

1. A battery cell comprising:
an electrode assembly;
a body case including an opening on one surface and accommodating the electrode assembly therein through the opening;
a coupling region located adjacent to the opening along at least a portion of a circumference of the opening in one region of the body case;
a coupling hole penetrating the body case in the coupling region;
a cover portion including a terminal portion electrically connecting the electrode assembly to an outside and coupled to the body case in the coupling region to cover the opening; and
an adhesive member cured by being located on an inner side surface of the body case and an outer side surface of the body case in the coupling region through the coupling hole and combining the cover portion and the body case.

2. The battery cell according to claim 1, wherein at least a portion of the adhesive member is located in the coupling hole.

3. The battery cell according to anyone of claim 1 or 2,
wherein the coupling hole includes a plurality of coupling holes, and
wherein at least a portion of the adhesive member is coupled to each other on the inner side surface of the body case through at least a portion of the plurality of coupling holes.

4. The battery cell according to preceding claims, wherein the adhesive member combines the cover portion and the body case by heating and pressurizing at a predetermined adhesive temperature and an adhesive pressure.

5. The battery cell according to preceding claims, wherein an area of a cross-section of the cover portion in a direction parallel to the opening is equal to or greater than an area of a cross-section of the body case.

6. The battery cell according to preceding claims, wherein a roughness of the outer side surface of the body case in the coupling region is different from a roughness of the outer side surface of the body case located outside the coupling region.

7. The battery cell according to claim 6, wherein the roughness of the outer side surface of the body case in the coupling region is greater than the roughness of the outer side surface of the body case located outside the coupling region.

8. The battery cell according to preceding claims, wherein the cover portion includes:
a cover-facing surface facing the opening; and
a cover side surface bending and extending in a direction toward the body case at each corner of the cover-facing surface, and
wherein the coupling hole prevents the cover side surface from being exposed to the outside when the cover side surface is combined with the coupling region.

9. The battery cell according to claim 8, wherein, when the cover portion is combined with the coupling region, the cover side surface is stepped with the outer side surface of the body case located outside the coupling region.

10. The battery cell according to anyone of claim 8 or 9, wherein, when the cover portion is combined with the coupling region, the cover side surface protrudes to the outside than the outer side surface of the body case located outside the coupling region.

11. The battery cell according to anyone of claims 8 to 10, wherein an area of a cross-section of the body case in the coupling region is smaller than an area of an other cross-section of the cover portion located outside the coupling region in a direction parallel to the opening, and equal to an area of a cross-section of the cover portion, and
wherein, when the cover portion is combined with the coupling region, the cover side surface forms a coplanar surface with the outer side surface of the body case located outside the coupling region.

12. The battery cell according to anyone of claims 8 to 11, wherein an area of a cross-section of the body case in the coupling region is smaller than an area of an other cross-section of the cover portion located outside the coupling region in a direction parallel to the opening, and smaller than an area of a cross-section of the cover portion, and
wherein, when the cover portion is combined with the coupling region, the cover side surface is stepped with the outer side surface of the body case located outside the coupling region.

13. The battery cell according to preceding claims,
wherein the opening includes:
a first opening formed on the one surface of the body case; and
a second opening formed on another surface of the body case facing the one surface of the body case,
wherein the coupling region includes:
a first coupling region located adjacent to the first opening along at least a portion of a circumference of the first opening in the one region of the body case; and
a second coupling region located adjacent to the second opening portion along at least a portion of a circumference of the second opening portion in another region of the body case,
wherein the coupling hole includes:
a first coupling hole penetrating the body case in the first coupling region; and
a second coupling hole penetrating the body case in the second coupling region, and
wherein the cover portion includes:
a first cover portion combined with the first coupling region to cover the first opening; and
a second cover portion combined with the second coupling region to cover the second opening portion.

14. The battery cell according to claim 13, wherein the adhesive member includes:
a first adhesive member cured by being located on the inner side surface of the body case and the outer side surface of the body case in the first coupling region through the first coupling hole, and combining the first cover portion and the body case; and
a second adhesive member cured by being located on the inner side surface of the body case and the outer side surface of the body case in the second coupling region through the second coupling hole, and combining the second cover portion and the body case.

15. The battery cell according to claim 14,
wherein the first coupling hole and the second coupling hole include a plurality of first coupling holes and a plurality of second coupling holes, respectively,
wherein at least a portion of the first adhesive member is coupled to each other on the inner side surface of the body case through at least a portion of the plurality of first coupling holes, and
wherein at least a portion of the second adhesive member is coupled to each other on the inner side surface of the body case through at least a portion of the plurality of second coupling holes.
